# EUROPEAN PATENT APPLICATION

(11) **EP 4 686 968 A1**
(43) Date of publication of application: **04.02.2026**
(21) Application number: 25192654.9
(22) Date of filing: 29.07.2025
(51) Int. Cl.: G02B 6/38, G02B 6/02

(54) **CONNECTOR FOR AVOIDING DEBRIS INGRESS INTO HOLLOW CORE OPTICAL FIBERS IN CABLE ASSEMBLIES AND RELATED METHOD**

(30) Priority: 02.08.2024 US 202463678573 P
(71) Applicant: Corning Research And Development Corporation, Corning, New York 14831 (US)
(72) Inventor: ELKINS, Robert Bruce, North Carolina, 28602 (US); ISENHOUR, Micah Colen, North Carolina, 27295 (US)
(74) Representative: Reddie & Grose LLP

(57) **Abstract**

A connector for use in a cable assembly is provided, specifically for cable assemblies including one or more hollow-core optical fibers. The connector includes a ferrule with bore(s) that receive the hollow-core optical fiber(s) and an end plate connected to end faces of the hollow-core optical fibers. The end plate is optically transparent for transmitting optical signals or light energy to and from the hollow-core optical fibers, and the end plate blocks and seals the hollow-core optical fibers at openings in the end faces to stop ingress of debris or other contaminants that can degrade or attenuate signal transmission through the interior of the fibers. Thus, cable assemblies using one or more hollow-core optical fibers are available and sufficiently robust and durable for use in further types of optical fiber systems.

## Description

### Priority Application

This application claims the benefit of priority of U.S. Provisional Application No. 63/678,573, filed on August 2, 2024, the content of which is relied upon and incorporated herein by reference in its entirety.

### Technical Field

This disclosure relates generally to optical fiber systems, and more particularly to cable assemblies and connectors including the use of hollow-core optical fibers.

### Background

Optical fibers are useful in a wide variety of applications, including the telecommunications industry for voice, video, and data transmissions. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core. The benefits of optical fiber are well known and include higher signal-to-noise ratios and increased bandwidth compared to conventional copper-based transmission technologies.

Hollow-core optical fibers are a newer type of optical fiber that guides light through a hollow air-filled core rather than through a solid silica core. The latest hollow-core optical fiber designs include an anti-resonant structure that can confine light over a broader range of wavelengths as compared to earlier photonic bandgap hollow-core fibers. These anti-resonant structures enable lower-loss transmission over a wider usable wavelength window than previously available from hollow-core optical fibers. A double nested anti-resonant nodeless optical fiber (DNANF) has been reported as having an attenuation level of 0.174 dB/km at 1550 nm, which is comparable to the performance of germanium doped all-glass fibers. In a more recent paper from OFC 2024, a hollow-core DNANF optical fiber was reported as having a loss of less than 0.11 dB/km. Thus, the performance of hollow-core optical fibers has become competitive with traditional solid-core optical fibers for long-haul optical data and signal transmission.

Hollow-core optical fiber has an effective index of refraction similar to that of air. As a result, light propagates through hollow-core optical fiber at essentially the same speed as light in vacuum (300,000 km/sec), which is about 50% faster than the speed at which light typically propagates through solid-core optical fiber (200,000 km/s). Thus, hollow-core optical fiber offers significantly reduced latency compared to solid-core optical fiber. Due to the improvements in signal loss and useable wavelengths resulting from recent research and development, hollow-core optical fiber is becoming increasingly attractive for use in commercial applications.

One problem that continues to impede the use of hollow-core optical fiber is potential difficulties in forming durable and robust connections between hollow-core optical fiber and widely deployed standard (solid core) optical fiber (or other optical fiber systems equipment such as optical receptacles). To this end, current telecommunications systems require connection between the optical fibers and equipment or connection to other fiber optic cables. To provide these connections, fiber optic connectors are often provided on the ends of fiber optic cables to non-permanently connect and disconnect optical elements in a fiber optic network. The process of terminating individual optical fibers from a fiber optic cable is referred to as "connectorization." Connectorization can be done in a factory, resulting in a "pre-connectorized" or "pre-terminated" fiber optic cable, or in the field (e.g., using a "field-installable" fiber optic connector).

In connectorizing fiber optic cables including one or more hollow-core optical fibers, one specific problem is that the hollow-core optical fiber is more vulnerable to contaminants (e.g., dust, dirt, oils, moisture, particulates, etc.) that may get lodged or trapped inside the hollow core of the optical fiber. The contaminants often impede propagation and degrade performance, and may contribute to interference, noise, or loss. This potential contamination risk increases the longer that any connector with hollow-core optical fibers is open and subjected to the ambient environment, whether in the factory setting where the connector is originally prepared, or in the field of use.

More particularly, there is a need for systems and methods of optically coupling hollow-core optical fibers in cable assemblies while protecting the hollow-core optical fibers from degraded performance caused by ingress of debris or other contaminants.

### Summary

In a first aspect of the disclosure, a connector is provided for use in a cable assembly. The connector includes at least one hollow-core optical fiber including an end face at a terminal end. The connector also includes a ferrule with at least one bore, with each of the bore(s) sized to receive one of the hollow-core optical fiber(s). An end plate is connected to the end face of the hollow-core optical fiber such that the end plate covers the end face to block debris or any other contaminants from ingress into an interior of the hollow-core optical fiber. The end plate is also coupled to the ferrule to complete assembly of the connector. It will be understood that the end plate is optically transparent to transmit light energy to or from the hollow-core optical fiber. By providing the end plate as part of the connector, hollow-core optical fiber can be used in optical fiber systems and cable assemblies more readily in the field without exposure to the elements causing any discernable loss in transmission function.

In one embodiment, the end plate is laser welded to the end face of the hollow-core optical fiber. The laser welding produces a weld line at which the end face is connected to the end plate. More specifically, the weld line may be formed along an outer cladding of the hollow-core optical fiber. In this regard, the weld line defines a continuous, closed periphery surrounding an opening into the interior of the hollow-core optical fiber and thereby seals the hollow-core optical fiber at the end face from any ingress of debris or other contaminants.

In another embodiment, the ferrule further includes a front end surface and a pocket. The front end surface is configured to face towards and abut another connector in the cable assembly. The pocket is formed at the front end surface, and the end plate is coupled to the ferrule by being received in the pocket. Further, the end plate may include a leading surface facing away from the connections to the hollow-core optical fiber. The pocket is sized and shaped to receive the end plate in such a manner that the leading surface is located generally parallel to or recessed behind the front end surface of the ferrule. Thus, the end plate does not add any additional length to the ferrule or the connector in such an embodiment.

In a further embodiment, the connector includes a bonding agent, which is applied to the hollow-core optical fiber along the bore of the ferrule. The bonding agent is cured to retain each of the hollow-core optical fiber(s) within the ferrule and at the corresponding bore(s). The ferrule may include a front body portion that is configured to receive the terminal end of the hollow-core optical fiber and a rear body portion. In such examples, the bonding agent is applied in the bore(s) along only the rear body portion of the ferrule to avoid contamination of the end face and the interior of the hollow-core optical fiber(s) with the bonding agent.

In yet another embodiment, the connector includes a plurality of the hollow-core optical fibers running in parallel within the ferrule. The end plate may then be connected to the end face of each of the plurality of hollow-core optical fibers so that the end plate is shared by multiple hollow-core optical fibers. This increases manufacturing efficiency for the connector and can improve robustness of the end plate.

In another embodiment, the terminal end of the hollow-core optical fiber is angle-cleaved such that the end face of the hollow-core optical fiber is oriented at an angle that is non-perpendicular to the longitudinal length of the hollow-core optical fiber. To match this, the end plate is angled similarly on the ferrule to mate with the angle of the end face of the hollow-core optical fiber.

It is desirable that the end plate be formed from a durable material that will maintain performance in field conditions while limiting impact on the light energy transmission of the optical fiber. In this regard, the end plate should be formed from material exhibiting a high scratch resistance or hardness to avoid picking up defects that would adversely affect light transmission through the connector. Moreover, the end plate should also define a small thickness to limit the amount of distance and material the light energy needs to move through before reaching whatever is connected to the hollow-core optical fiber at the connector. Some exemplary materials for the end plate include glass or polymer.

In a second aspect of the disclosure, a cable assembly is configured for optical data transmission, such as between data centers. The cable assembly includes a cable containing at least one hollow-core optical fiber. The cable extends between a first terminal end and a second terminal end. A first connector having a first connector body is coupled to the first terminal end of the cable, and a second connector having a second connector body is coupled to the second terminal end of the cable.

Each of the first and second connectors includes the following elements located within the respective connector body: an end face of each hollow-core optical fiber, a ferrule with at least one bore, and an end plate coupled to the ferrule. Each of the at least one bore is sized to receive one of the at least one hollow-core optical fiber. The end plate is connected to the end face of the hollow-core optical fiber such that the end plate covers the end face and blocks debris or any other contaminants from ingress into an interior of the hollow-core optical fiber. The end plate is optically transparent to transmit light energy to or from the hollow-core optical fiber. The first and second connectors are configured for mechanical coupling to another cable assembly at the connector bodies to enable optical data transmission using the at least one hollow-core optical fiber.

In a third aspect of the disclosure, a method is provided for assembling a connector for coupling optical fibers in a cable assembly. The method includes inserting a terminal end of at least one hollow-core optical fiber through at least one bore defined in a ferrule such that an end face of each of the hollow-core optical fiber(s) projects beyond a front end surface of the ferrule. Then, the method continues with connecting an end plate to the end face of the hollow-core optical fiber(s). The end plate covers the end face(s) to block debris or any other contaminants from ingress into an interior of the hollow-core optical fiber(s). The end plate is optically transparent. The method also includes coupling the end plate to the front end surface of the ferrule to position the terminal end of the hollow-core optical fiber(s) proximate the front end surface of the ferrule.

In one embodiment, the step of connecting the end plate to the end face further includes laser welding the end plate to the end face of the hollow-core optical fiber. The laser welding produces a weld line at which the end face is connected to the end plate. This weld line may be formed specifically along an outer cladding of the hollow-core optical fiber, with the weld line defining a continuous, closed periphery surrounding an opening into the interior of the hollow-core optical fiber. The weld line thus seals the hollow-core optical fiber at the end face from any ingress of debris or other contaminants.

In another embodiment, the ferrule further includes a pocket formed at the front end surface. The step of coupling the end plate to the front end surface of the ferrule then includes inserting the end plate into the pocket. After insertion, the end plate is fully received in the pocket and is located generally parallel to or recessed behind the front end surface of the ferrule.

In a further embodiment, the method includes applying a bonding agent to the at least one hollow-core optical fiber along the at least one bore. The bonding agent is applied only along a rear body portion of the ferrule spaced from the front end surface. Such positioning of the bonding agent avoids contamination of the end face and the interior of the hollow-core optical fiber(s) with the bonding agent. The method then includes curing the bonding agent after the end plate is coupled to the front end surface of the ferrule. The curing of the bonding agent retains each of the hollow-core optical fiber(s) within the ferrule at desired positions.

In yet another embodiment, the connector includes a plurality of hollow-core optical fibers running in parallel in the ferrule. In such embodiments, the step of connecting the end plate to the end face further includes connecting the end plate to the end faces of each of the plurality of hollow-core optical fibers. The end plate is thus shared by multiple hollow-core optical fibers in such alternatives.

The method may further include securing the ferrule and end plate within a connector body configured to terminate one end of a cable carrying the at least one hollow-core optical fiber. The connector body is configured to mechanically couple to another cable assembly or an optical receptacle.

Additional features and advantages will be set forth in the detailed description which follows, and in part will be readily apparent to those skilled in the technical field of optical fiber systems. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1A is a perspective view of a (fiber optic) cable assembly that can include at least one connector for hollow-core optical fibers used to transmit signals between data centers, in one embodiment of the present invention.
FIG. 1B is a perspective view of one of the connectors of the cable assembly of FIG. 1A, the connector terminating a fiber optic cable and designed for coupling to a connector on another cable assembly.
Fig. 2 is a diagrammatic cross-sectional view of an exemplary hollow-core optical fiber.
Fig. 3 is a perspective front end view of a connector for hollow-core optical fibers according to one embodiment, showing a ferrule assembled with an end plate and a plurality of hollow-core optical fibers.
Fig. 4 is a detailed front end view of a portion of the ferrule and end plate of Fig. 3, showing further details of a weld connection made between the end plate and the hollow-core optical fibers in this embodiment.
Fig. 5 is a schematic top cross-sectional view of the connector of Fig. 3, showing further constructional details of the elements forming the connector.
Fig. 6 is a schematic top cross-sectional view showing a portion of an alternative embodiment of a connector where an end face of the hollow-core optical fiber is angled and the end plate is also angled.
Fig. 7 is a schematic top cross-sectional view showing a portion of a further alternative embodiment of a connector where an end face of the hollow-core optical fiber is partially angled and the end plate is angled.
Fig. 8 is a diagrammatic top cross-sectional view of a first step in an assembly process for making a connector according to embodiments of the present invention, with a plurality of hollow-core optical fibers being inserted through bores located in a ferrule.
Fig. 9 is a diagrammatic top cross-sectional view similar to Fig. 8 but showing a second step in the assembly process, specifically including connection of an end plate to the end faces of the hollow-core optical fibers.
Fig. 10 is a diagrammatic top cross-sectional view similar to Fig. 9 but showing a third step in the assembly process, specifically including pushing the end plate into a pocket in the ferrule and applying bonding agent to portions of the hollow-core optical fibers in the bores.

It should be understood that the appended drawings are not necessarily to scale, and may present a somewhat simplified representation of various features illustrative of the basic principles of the disclosure. For example, certain features illustrated by the drawings may be enlarged or distorted relative to others to facilitate visualization and a clear understanding.

### Detailed Description

Various embodiments will be further clarified by examples in the description below. In general, the description relates to systems and methods that protect hollow-core optical fibers from picking up debris or other contaminants into the interior of the fibers before use in the field in a connector and/or in a cable assembly. By applying a durable end plate to the end face(s) of one or more hollow-core optical fiber(s) in a cable assembly, the risk of degraded performance caused by environmental contaminants is reduced significantly, thereby eliminating one of the few potential drawbacks to use of hollow-core optical fibers in optical fiber systems.

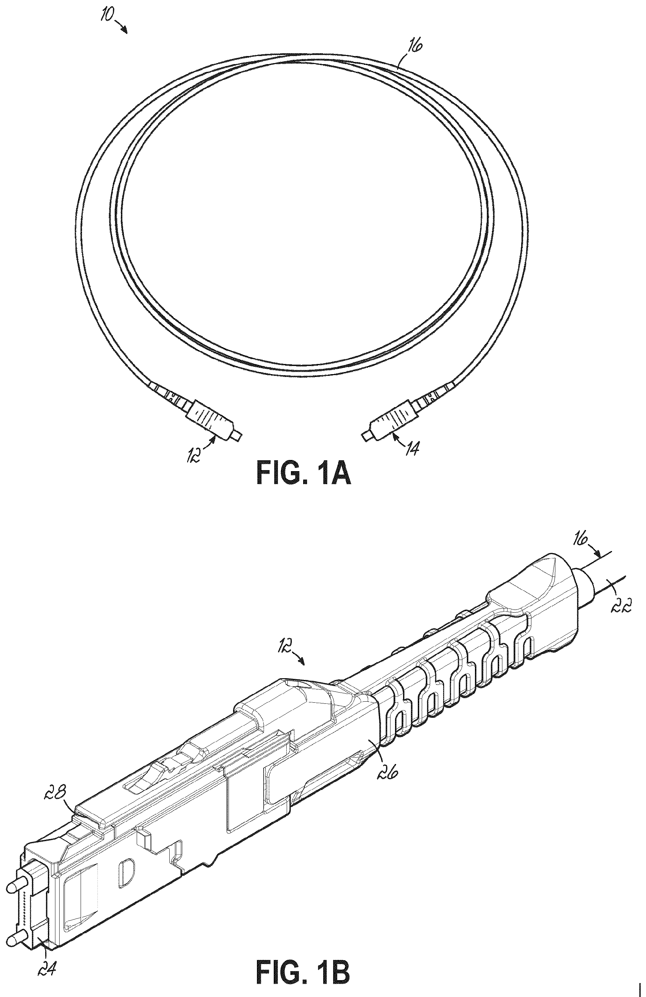

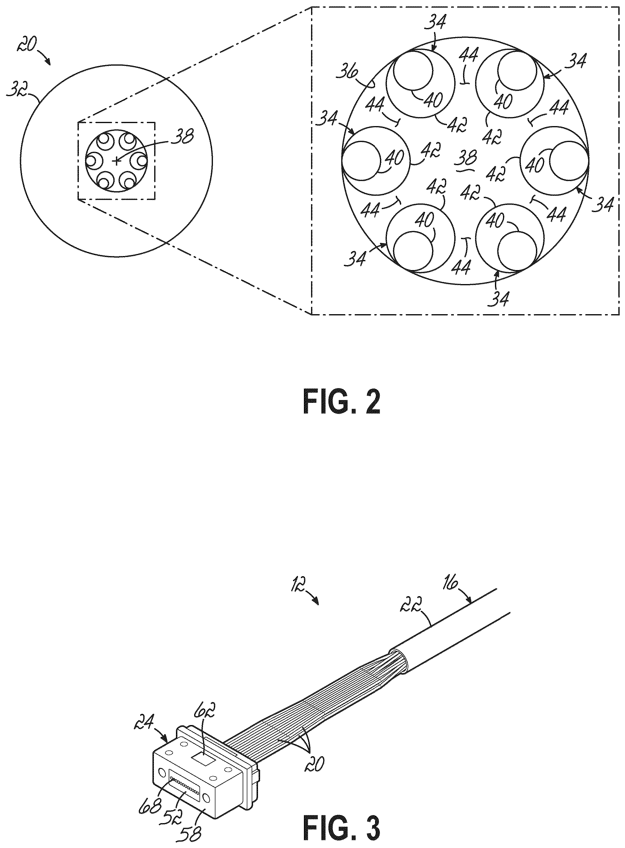

Fig. 1A depicts an embodiment of a cable assembly 10 in accordance with embodiments of the present disclosure. The cable assembly 10 may be connectorized along both ends thereof. As used herein, the term "connectorized" refers to an embodiment where the cable assembly 10 is prepared for coupling to or plugging into an optical receptacle or a connector on another cable assembly to create a mechanical coupling for optical data transmission between the cable assembly 10 and the other element. As depicted in Fig. 1A, the cable assembly 10 is connectorized with a first connector 12 at a first end and a second connector 14 at a second end. A length of optical fiber cable 16 extends between the first connector 12 and the second connector 14. In one or more embodiments, the optical fiber cable 16 has a length of up to 100 meters. As such, the cable assembly 10 can be used in various applications, including as a "patchcord" traversing small lengths between data centers, in one example, or as a long-run coupling between two electronic components located at significant distance from each other. It will be understood that the first and second connectors 12, 14 as shown can include a connected end plate and hollow-core optical fibers (first described below in detail with reference to Fig. 3) to provide several functional advantages as described throughout this disclosure.

With reference to Fig. 1B, one of the connectors 12 of the cable assembly 10 is shown in further detail, specifically before being connected to an optical fiber receptacle or the like. The cable 16 of this embodiment carries a plurality of optical fibers, specifically including at least one hollow-core optical fiber 20 (see Figs. 2 and 3), all within an outer jacket or sheath 22. These optical fibers are terminated at their ends within the connector 12, typically at a ferrule 24 located at least partially within a connector body 26 (also sometimes referred to as a housing assembly). The connector body 26 includes structural elements at a leading end 28 thereof for mechanically coupling to the optical fiber receptacle, thereby enabling optical data transmission from the cable assembly 10 to the connected element. In this regard, the connector 12 is designed to create an optical connection for transmission of light energy when the mechanical coupling is completed. The connector body 26 may define strain relief elements and other known components as will be well understood in the fiber optics field.

In the specific example shown in Fig. 1B, the connector 12 shown is an MMC fiber optic connector. The MMC fiber optic connector is considered to be part of a class of fiber optic connectors referred to as very small form factor (VSFF) connectors, which have small footprint ferrules and connector housing assemblies compared to standard fiber optic connectors in the telecommunications industry. By way of example, the MMC fiber optic connector utilizes a very small form factor MT-style ferrule, referred to as a TMT ferrule. While embodiments are described and shown in these Figures in reference to use of the MMC fiber optic connector and its TMT ferrule, embodiments of the disclosure are applicable to other fiber optic connectors (and more specifically the ferrules used therein), including both conventional multifiber fiber optic connectors and VSFF fiber optic connectors other than the MMC fiber optic connector. To this end, it will be understood that the connector 12 and ferrule 24 of the embodiments of this invention may be other styles of known fiber optic components, including LC ferrules, MC ferrules, and so on.

As described above, the cable assembly 10 of this disclosure advantageously includes at least one hollow-core optical fiber 20. Fig. 2 depicts a cross-sectional axial view of an exemplary hollow-core optical fiber 20. The hollow-core optical fiber 20 includes an outer cladding 32 and a plurality of structural tubes 34 arranged circumferentially on an inner surface 36 of the cladding 32 to define a hollow core 38 (also referred to as an interior 38 of the hollow-core optical fiber 20). The depicted embodiment includes six structural tubes 34 each having a nested structure comprising an inner tube 40 and an outer tube 42. It should be understood, however, that the fiber optic coupling systems and methods disclosed herein may be used with any type of hollow-core optical fiber and are therefore not limited to hollow-core optical fibers including any number of structural tubes or structural tubes that are nested.

The cladding 32 and structural tubes 34 may be formed, for example, of doped or undoped silica glass. The dimensions of the elements of the hollow-core optical fiber 20 may be selected so that adjacent structural tubes 34 are separated by a gap 44. The gap 44 may prevent adjacent structural tubes 34 from contacting each other. The dimensions and other characteristics of the cladding 32 and structural tubes 34 (e.g., the refractive index) may be selected to define a waveguide that generally confines optical beams propagating through the hollow-core optical fiber 20 to the hollow core 38. The thickness of the walls of the structural tubes 34 may also be selected to provide an anti-resonant effect that reduces leakage of optical beams from the hollow core 38 into the structural tubes 34. However, the fiber optic coupling systems and methods disclosed herein are not limited to hollow-core optical fibers having any particular set of structural dimensions.

As is readily understood from the illustration in Fig. 2 and the foregoing description of an exemplary construction, when the hollow-core optical fiber 20 is cleaved at a free end thereof, the generally open interior 38 is potentially exposed to the external environment. In such a circumstance, it is possible for debris or other contaminants to enter the interior 38, which adversely affects the functional performance of the hollow-core optical fiber 20 as such debris or contaminants can block light energy transmission or deflect it in a non-desirable manner - to this end, any optical signal may be undesirably attenuated by the debris or contaminants. The connector 12, 14 of the embodiments described herein addresses this problem by providing an end plate for blocking debris or contaminant ingress into the interior 38 of the one or more hollow-core optical fibers 20.

One example of structure that may be located within the connector 12 for these purposes in embodiments of the present disclosure is shown with reference now to Figs. 3-5. In the cable 16 of this embodiment, a plurality of hollow-core optical fibers 20 are carried within the outer sheath 22. More specifically, twelve hollow-core optical fibers 20 are included in this set of illustrations. The hollow-core optical fibers 20 extend from an open end of the outer sheath 22 that may be removed as part of the manufacturing process for the connector 12. To make the hollow-core optical fibers 20 ready for connection to an optical receptacle or another fiber optics cable assembly, each of the hollow-core optical fibers 20 is cleaved to form a terminal end 50, which is then positioned within the ferrule 24 such that the ferrule 24 terminates each of the hollow-core optical fibers 20. As now described in further detail, each of the hollow-core optical fibers 20 is also connected to an end plate 52 as a portion of assembly with the ferrule 24 in the connector 12. The ferrule 24, end plate 52, and at least one hollow-core optical fiber 20 collectively define the basic components of a connector 12 for cable assemblies 10 according to the embodiments disclosed herein.

Although each of the optical fibers shown in this example connector 12 is a hollow-core optical fiber 20, it will be understood that this may be varied without departing from the scope of this disclosure. For example, in one alternative, at least one of the twelve optical fibers is a hollow-core optical fiber 20, with the remaining optical fibers includes one or more single mode fiber or multi-mode fiber (e.g., solid core optical fibers). In another alternative, the cable 16 may carry a plurality of cable subunits (e.g., six or eight cable subunits; not shown), where each cable subunit may carry a plurality of optical fibers, with one or more of these being a hollow-core optical fiber 20. Of course, the cable 16 and any cable subunits may carry more or fewer of the optical fibers, in which case the ferrule 24 will be modified to handle and terminate the correct number of optical fibers.

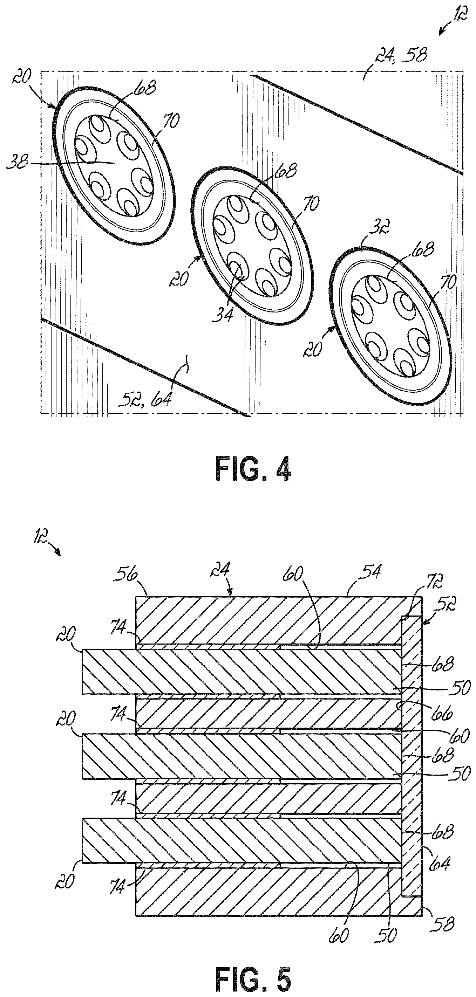

Further details of the ferrule 24 are shown in Figs. 3 and 5. The ferrule 24 includes a ferrule body defining a front body portion 54 and a rear body portion 56. The front body portion 54 includes a front end surface 58 configured to face towards and abut another connector or optical receptacle, as shown previously in Fig. 2. The ferrule 24 is configured to position the terminal ends 50 of the hollow-core optical fibers 20 proximate to the front end surface 58 so that light energy can be transmitted to and/or from the hollow-core optical fibers 20. As shown in Fig. 5, the ferrule 24 includes a plurality of bores 60 extending through the ferrule body to accommodate the hollow-core optical fibers 20. Each of the bores 60 is sized to receive one of the hollow-core optical fibers 20 and thereby position the terminal ends 50 relative to the front end surface 58. Although there are twelve bores 60 aligned parallel to one another in a single row in the ferrule 24 of these Figures, it will be appreciated that alternative versions of the ferrule may include multiple rows of bores 60 and different alignments respectively. The ferrule 24 also includes an open window 62 typically located along a top surface that extends across both the front body portion 54 and the rear body portion 56. The open window 62 provides further access to the bores 60 for reasons described further below.

The ferrule 24 carries the end plate 52 at a position adjacent the front end surface 58. The end plate 52 is a cover that is applied to at least one of the hollow-core optical fibers 20 (and in the illustrated example, to all of the plurality of the hollow-core optical fibers 20). The end plate 52 must therefore be manufactured from a material that is optically transparent so that light energy can be transmitted to and/or from the hollow-core optical fibers 20 via the end plate 52. The end plate 52 is shown as a glass plate in these views, but other materials such as polymers can be used so long as the end plate 52 is provided with the desired durability and optical transparency for use in the connector 12. The end plate 52 includes a leading surface 64 configured to face outwardly away from the hollow-core optical fiber 20 and the ferrule 24, and a back surface 66 configured to face towards and abut the hollow-core optical fibers 20 as set forth below.

The connection of the end plate 52 to the hollow-core optical fibers 20 is now described with specific reference to Figs. 4 and 5. Each of the hollow-core optical fibers 20 defines an end face 68 at the terminal end 50 following the cleaving of the hollow-core optical fiber 20. This end face 68 includes an opening into the generally hollow interior 38, which can be seen for clarity in Fig. 4. Advantageously, this end face 68 is connected to the back surface 66 of the end plate 52 to cover the end face 68 and thereby block and seal the opening into the interior 38. The connection of the end plate 52 to the hollow-core optical fibers 20 is thus configured to block ingress of debris or other contaminants into the interior 38 of the hollow-core optical fibers 20.

This connection is preferably made by fusion bonding these elements together, such as by laser welding the end plate 52 to the end faces 68 of the hollow-core optical fibers 20. The laser welding can be done without needing to contact the glass material of the end plate 52, thereby reducing any risk of scratching or other inadvertent damage to the assembly. One example of the laser welding is shown schematically in Fig. 4. In this regard, the laser welding is performed to produce a weld line 70 at which the end face 68 is permanently coupled to the back surface 66 of end plate 52. As shown in Fig. 4, this weld line 70 is formed specifically along the outer cladding 32 at the end face 68, while also being formed to define a continuous, closed periphery surrounding the opening into the interior 38. Although the weld line 70 is shown generally circular to match the shape and profile of the outer cladding 32 shown in these illustrations, it will be understood that any continuous, closed periphery will suffice (moreover, the weld line 70 may be formed along substantially an entirety of the surface of the outer cladding 32 at the end face 68 or in a more limited area as shown in the drawings). The laser welding forms a gap-free connection at the weld line 70 between the end face 68 of the hollow-core optical fiber 20 and the end plate 52 that can be seen in Fig. 5 in the full assembly of the connector 12. As such, any pathway for access into the interior 38 via the opening at the end face 68 is closed and sealed against any ingress of contaminants following this connection made by the laser welding.

In the embodiment shown in Figs. 3-5, the end plate 52 is received in a pocket 72 provided in the ferrule 24 when the connector 12 is fully assembled. The pocket 72 is an open recess that is defined along the front end surface 58 of the front body portion 54. The pocket 72 in this embodiment is specifically sized and shaped (*e.g.,* as a *rectangular-shaped receptacle*) to generally match the size and shape of the end plate 52. Thus, the end plate 52 is coupled to the ferrule 24 by being placed in a frictional engagement or the like within the pocket 72. It will be appreciated that a bonding agent or another connecting/bonding element may be used to secure the connection between the end plate 52 and the ferrule 24 without departing from the scope of this disclosure. Of course, any such additional bonding must be done in such a manner to not block the optical path through the optically transparent end plate 52 (from the hollow-core optical fibers 20).

The provision of the pocket 72 enables the end plate 52 to be connected to the ferrule 24 without adding additional length to the ferrule 24 that could otherwise affect how the connector 12 mates with another fiber optic element. To this end, in embodiments like the one shown where the pocket 72 substantially receives an entirety of the end plate 52 therein, the leading surface 64 of the end plate 52 is positioned generally parallel to (or recessed behind) the front end surface 58 of the ferrule 24. Thus, no additional length is added by incorporating the end plate 52 into the connector 12. Instead, the leading surface 64 of the end plate 52 and the front end surface 58 of the ferrule 24 present a shared mating surface for connection to other fiber optics elements, as shown in Fig. 3 and as is typical in known ferrule designs. The addition of the pocket 72 is the only substantial modification to the design of the ferrule 24, but it will be appreciated that the end plate 52 could instead be configured to be connected to the front end surface 58 in other embodiments as well (e.g., where a pocket 72 is not provided).

With continued reference to Fig. 5, another feature of the assembled connector 12 is shown (schematically) in detail. To this end, the connector 12 also includes a bonding agent 74 such as a curable adhesive material that is used to secure the hollow-core optical fibers 20 into the bores 60 of the ferrule 24. As shown in Fig. 5, the bonding agent 74 is specifically applied in each of the bores 60 to provide, after curing, a further connection of the corresponding hollow-core optical fiber 20 to the ferrule 24. The bonding agent 74 may be inserted into the bores 60 using the open window 62 in the ferrule 24 described previously.

The bonding agent 74 is more specifically located in the bores 60 only along the rear body portion 56 of ferrule 24 in the illustrated embodiment - which is to say, not along the bores 60 at the front body portion 54. By placing the bonding agent 74 along the rear body portion 56 only, a significant spacing or gap is provided between the bonding agent 74 and the end face 68 of hollow-core optical fiber 20 (and therefore also the opening into the interior 38 of the fiber). This spacing or gap helps avoid any potential contamination of the end face 68 or the opening of the hollow-core optical fibers 20, although in the illustrated embodiment, such contamination should also be blocked by the seal provided along weld line 70. Regardless, the positioning of the bonding agent 74 allows for reliable and durable securing of each of the hollow-core optical fibers 20 within the bores 60 and the ferrule 24 while continuing to assure that ingress of debris or contamination into the interior 38 of the hollow-core optical fibers 20 is avoided. As shown in Fig. 5, the bonding agent 74 effectively blocks another flow path for any such contaminants into the openings of the hollow-core optical fibers 20 (in the event the weld line seals fail, for example), so the bonding agent 74 helps achieve both structural assembly and sealing of the hollow-core optical fibers 20 after curing.

Consequently, in the fully-assembled state of connector 12 as shown in these Figs. 3 through 5, the hollow-core optical fibers 20 are terminated and secured within the ferrule 24 as normal but with the added protection against ingress of contaminants or debris by the end plate 52 connected to the hollow-core optical fibers 20. The ferrule 24 can be connected to another fiber optics device or connector in known manners, as the addition of the end plate 52 is configured to not otherwise affect the function of ferrule 24. Advantageously, the connector 12 incorporating the end plate 52 allows the cable assembly 10 to be stored and used in the field without significant risk of environmental conditions or contaminants degrading the performance of the hollow-core optical fibers 20 before any connections are made using the cable assembly 10. Thus, the added functional benefits and operation of hollow-core optical fibers 20 can be leveraged in additional environments and fields.

A further note regarding the schematic illustration of the connector 12 in Fig. 5 is warranted before moving to additional embodiments and variations. In Fig. 5, only three of the hollow-core optical fibers 20 are shown running parallel to one another within bores 60 in the ferrule 24. This is done so that the elements forming the connector 12 are large enough to easily visualize in this schematic view. To this end, although the end plate 52 and the pocket 72 are shown so as to cover only three hollow-core optical fibers 20 in this view, it will be understood that the end plate 52 actually extends as shown in Figs. 3 and 4 to cover each of the hollow-core optical fibers 20 within the ferrule 24 in the preferred embodiment shown in these Figures.

Additionally, while the end plate 52 shown in Figs. 3 through 5 is connected to each of the hollow-core optical fibers 20 such that the end plate 52 is shared by all the fibers 20, such a configuration could be modified in other embodiments within the scope of this disclosure. For example, a separate end plate 52 could be attached to the end face 68 of each hollow-core optical fiber 20 and then coupled to the ferrule 24 in alternative embodiments. Of course, having a shared end plate 52 adds some manufacturing assembly efficiencies, but it may be desirable to have separate end plates 52 for one hollow-core optical fiber 20 or a subgroup of the hollow-core optical fibers 20 (for example, in embodiments where the cable 16 contains some solid core fibers as well). In any such alternative embodiments, the ferrule 24 can be modified to provide one or more pockets 72 consistent with the end plate(s) 52 being used.

As noted above, the end plate 52 is optically transparent, regardless of how many of the hollow-core optical fibers 20 that the end plate 52 is connected to. It is generally desirable to minimize a thickness of the end plate 52 measured between its leading surface 64 and back surface 66, so as to minimize a length of open space that light energy must move through when entering or exiting the end face 68 of the hollow-core optical fiber 20. For example, the end plate 52 preferably defines a thickness of no more than 0.5 millimeters. One example of such a material is the thin, flexible Willow ^{®} Glass commercially available from Corning Incorporated, of Corning, New York, United States, the original Applicant of the present application. However, other types of glass or polymer may suffice for this objective (and the additional functionalities desired including optical transparency). Furthermore, it is desirable that the end plate 52 be formed from material exhibiting a scratch resistance or hardness of at least 500 HV (i.e., Vickers hardness number). This scratch resistance will stand up to most normal environments and uses in the fields where the cable assembly 10 and the connector 12 will be stored and then deployed, and the end plate 52 (specifically the leading surface 64 thereof) will thus preferably remain free from markings or scratches that could adversely affect the optical transparency and transmission of light energy through the end plate 52. Additionally, the end plate 52 may also be provided in some embodiments with a coating such as an anti-reflective coating to mitigate or avoid energy losses caused when transmitting light energy through the end plate 52. Such an anti-reflective coating can be applied on one or both surfaces 64, 66 of the end plate 52.

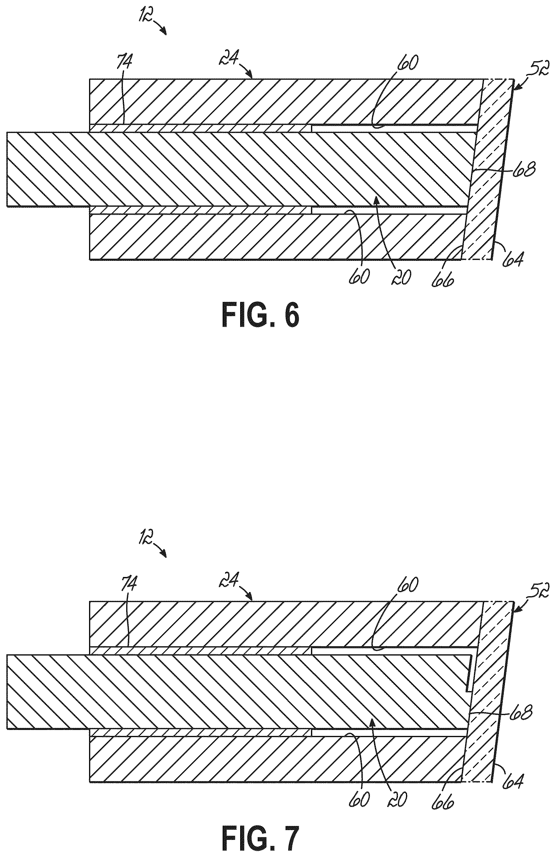

Turning with reference to Figs. 6 and 7, in some embodiments the hollow-core optical fiber 20 may be angled cleaved instead of being straight cleaved as shown in the prior illustrations. With such an angle-cleaving of the terminal end 50, the end face 68 is oriented at a non-perpendicular angle to the longitudinal length of the hollow-core optical fiber 20. In such embodiments, the end plate 52 can also be angled to thereby match the angle-cleaving of the hollow-core optical fiber 20. Such a configuration still provides a coupling that covers and seals the interior 38 of the hollow-core optical fiber 20 from ingress of debris or other contaminants after the end plate 52 is attached (such as by laser welding) to the end face 68. Advantageously, the angling helps mitigate any reflections of light energy that may otherwise occur when having the end plate 52 present a perpendicular back surface 66 for the light energy to move through when exiting (or entering) the hollow-core optical fiber 20. It will be understood that various angling can be used depending on the needs of the end application and the specific parameters of the hollow-core optical fiber 20.

In Fig. 6, the angle-cleaving is generally cleanly done such that the end face 68 presents a generally planar and uniform profile for attachment to the end plate 52. However, it is often the case that an angle-cleaving of a non-uniform element like the hollow-core optical fiber 20 leaves some variation or inconsistency in the end face 68 (e.g., the entirety is not at the same angle following the cleave). Indeed, the cleaving of the hollow-core optical fiber 20 is typically done on site where the connector 12 is being assembled just before assembly with the ferrule 24, so predictability of the end result is not always assured. Such a scenario is schematically shown in Fig. 7. However, the fusion bonding or similar coupling provided by the laser welding (not visible in Fig. 7) still closes the opening into the interior 38 of hollow-core optical fiber 20 in such an alternative, thereby continuing to provide the technical function of blocking ingress of debris and other contaminants with the end plate 52. To this end, regardless of any angle-cleave provided in the hollow-core optical fibers 20 and regardless of the particular layout of the end plate 52, the construction of the connector 12 continues to provide the operation described throughout this disclosure.

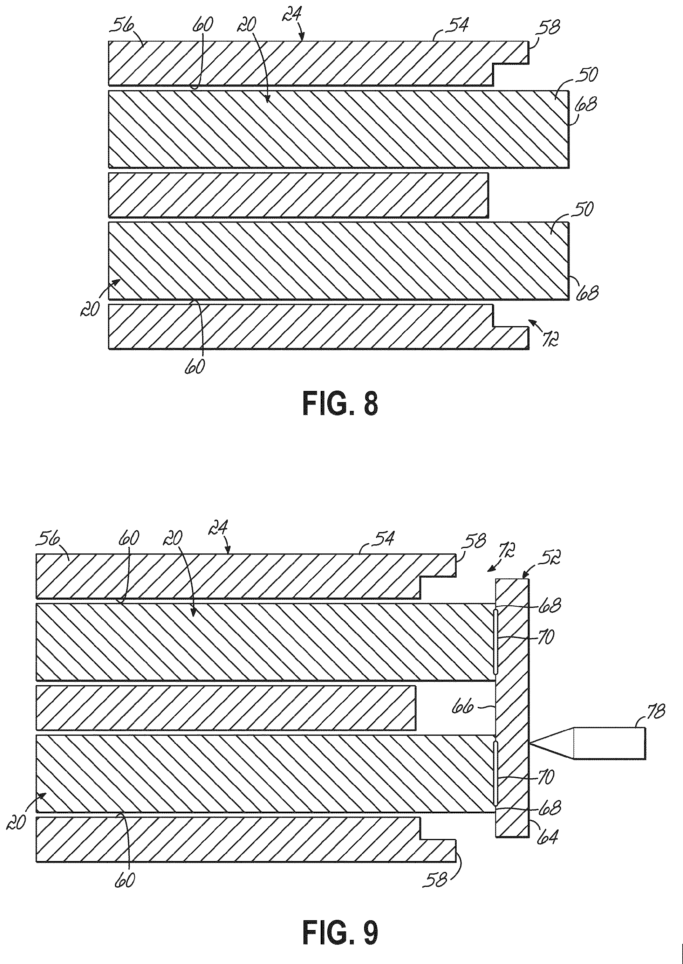

Now turning with reference to Figs. 8 through 10, an exemplary embodiment of a method for assembling a connector 12 as described above is shown in further stepwise detail. The process begins with providing an optical fiber cable to be connectorized and the other components of the connector 12, specifically the ferrule 24 and the end plate 52. If necessary, the outer sheath 22 of the optical fiber cable is removed following a cutting or cleaving of the optical fiber cable (such as from a coil or storage supply of the cable) along a short length at a terminal end to reveal terminal ends 50 of at least one hollow-core optical fiber 20 (two shown in these views). Also if necessary, a further cleave is performed to produce new terminal ends 50 having end faces 68 with openings into the interior 38 of the hollow-core optical fibers 20. This further cleave is a straight or perpendicular cleave in this example, but it will be understood from the alternatives provided above that an angle cleave is also possible at this step. The hollow-core optical fibers 20 are then ready for installation into the ferrule 24.

At Fig. 8, the process includes the step of inserting the terminal end 50 of each of the hollow-core optical fibers 20 into and through a corresponding bore 60 in the ferrule 24. For example, the terminal end 50 can be inserted into the counterpart bore 60 at the rear body portion 56 and then advanced until the end face 68 of hollow-core optical fiber 20 projects beyond the front end surface 58 at the front body portion 54 as shown. The hollow-core optical fibers 20 may be advanced while applying vacuum or end pressure to keep the area and the interior 38 of the hollow-core optical fibers 20 clear from any debris or contaminants. Once all the hollow-core optical fibers 20 are moved to the position shown in Fig. 8, the process can continue with the connection of the end plate 52.

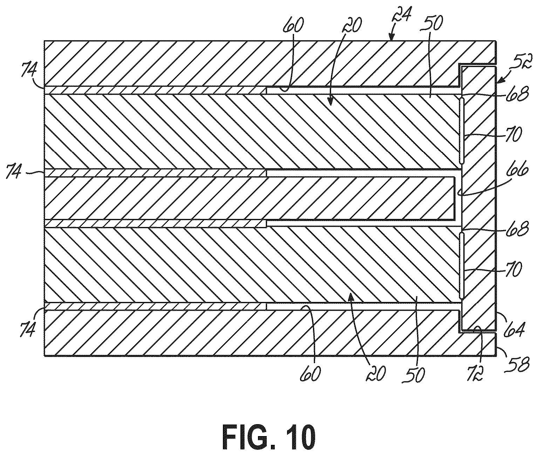

Fig. 9 shows the end plate 52 being connected to the end face 68 of the hollow-core optical fibers 20. In this specific example, the connection step is performed by laser welding the end plate 52 with a laser 78 that does not have to contact the glass of the end plate 52 as shown in Fig. 9. The laser welding produces a weld line 70 (shown exaggerated for illustration purposes in Figs. 9 and 10) that permanently joins the back surface 66 of end plate 52 with the end face 68 of hollow-core optical fibers 20. The weld line 70 can specifically be formed along an outer cladding of the hollow-core optical fiber 20 and is configured to produce a continuous, closed periphery surrounding the opening into the interior 38 defined at each of the end faces 68. Accordingly, the weld line 70 formed in this connection step seals the hollow-core optical fiber 20 from ingress of debris or other contaminants into the interior 38. As shown in Fig. 9, the welding or connecting is repeated for each of the hollow-core optical fibers 20 such that the end plate 52 is connected to and is shared by the hollow-core optical fibers 20.

The assembly method continues as shown at Fig. 10 with two further steps. First, the end plate 52 - which is now secured to all of the hollow-core optical fibers 20 - is coupled to the front end surface 58 of the ferrule 24 to connect these elements together. More specifically, the ferrule 24 in this embodiment includes a pocket 72 that is located along the front end surface 58 and is sized to receive the end plate 52. The end plate 52 is therefore inserted into the pocket 72 until the end plate 52 is fully received in the pocket 72 (or substantially so) with the leading surface 64 of end plate 52 being parallel/proximate to or slightly recessed behind the front end surface 58 of ferrule 24. It will be understood that the hollow-core optical fibers 20 are drawn backwards through the bores 60 during this step as well, but the connection to the end plate 52 keeps the hollow-core optical fibers 20 in the desired position within the ferrule 24 as shown in Fig. 10. To this end, the terminal end 50 of each of the hollow-core optical fibers 20 is positioned proximate the front end surface 58 of the ferrule 24 when the end plate 52 is in the pocket 72.

Second, a bonding agent 74 such as a curable adhesive is applied within the bores 60 to the hollow-core optical fibers 20 and specifically only along the rear body portion 56 of the ferrule 24. This positioning of the bonding agent 74 assures that there will be no contamination or other fouling of the interface between the end plate 52 and the end faces 68 of hollow-core optical fibers 20. Once applied as shown schematically in Fig. 10, the bonding agent 74 is cured to solidify the connection between the hollow-core optical fibers 20 and the ferrule 24, thereby retaining each of the hollow-core optical fibers 20 in the corresponding bores 60. Moreover, as initially described above, this cured bonding agent 74 blocks another path of potential ingress of debris or other contaminants towards the openings into the interior 38 of the hollow-core optical fibers 20 (e.g., from the rear of the ferrule 24). This portion of the connector 12 is then fully assembled and ready for use in fiber optics applications after finishing these steps as shown in Fig. 10.

The ferrule 24 and end plate 52 can then be secured within the connector body 26 previously described. The connector body 26 can then be used with the cable assembly 10 to connect the cable assembly 10 to an optical fiber receptacle or some other similar component. Once again, the end plate 52 does not interfere (in any significant manner) with the transmission of light energy or optical data through the hollow-core optical fibers 20, and the interior 38 of such hollow-core optical fibers 20 is fully protected from ingress of debris or contaminants that could otherwise adversely affect data transmission (e.g., attenuation of signal or the like) when using the hollow-core optical fibers 20. The connector 12 and cable assembly 10 produced by this method thus improves the potential for use of hollow-core optical fibers 20 in these settings.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

## Claims

1. A connector for use in a cable assembly, comprising:
at least one hollow-core optical fiber including an end face at a terminal end;
a ferrule including at least one bore, with each of the at least one bore sized to receive one of the at least one hollow-core optical fiber; and
an end plate connected to the end face of the at least one hollow-core optical fiber, such that the end plate covers the end face to block debris or any other contaminants from ingress into an interior of the at least one hollow-core optical fiber,
wherein the end plate is optically transparent to transmit light energy to or from the at least one hollow-core optical fiber, and the end plate is also coupled to the ferrule to complete assembly of the connector.

2. The connector of claim 1, wherein the end plate is laser welded to the end face of the at least one hollow-core optical fiber, the laser welding producing a weld line at which the end face is connected to the end plate.

3. The connector of claim 2, wherein the weld line is formed along an outer cladding of the hollow-core optical fiber, such that the weld line defines a continuous, closed periphery surrounding an opening into the interior of the hollow-core optical fiber and thereby sealing the hollow-core optical fiber at the end face from any ingress of debris or other contaminants.

4. The connector of any of claims 1-3, the ferrule further comprising:
a front end surface configured to face towards and abut another connector in the cable assembly; and
a pocket formed at the front end surface, wherein the end plate is coupled to the ferrule by being received in the pocket.

5. The connector of claim 4, the end plate further comprising:
a leading surface facing away from connections to the at least one hollow-core optical fiber,
wherein the pocket is sized and shaped to receive the end plate in such a manner that the leading surface is located generally parallel to or recessed behind the front end surface of the ferrule.

6. The connector of any of claims 1-5, further comprising:
a bonding agent which is applied to the at least one hollow-core optical fiber along the at least one bore, with the bonding agent being cured to retain each of the at least one hollow-core optical fiber within the ferrule at corresponding ones of the at least one bore.

7. The connector of claim 6, wherein the ferrule includes a front body portion, which is configured to receive the terminal end of the at least one hollow-core optical fiber, and a rear body portion, and the bonding agent is applied in the at least one bore only along the rear body portion of the ferrule to avoid contamination of the end face and the interior of the at least one hollow-core optical fiber with the bonding agent.

8. The connector of any of claims 1-7, wherein the at least one hollow-core optical fiber includes a plurality of hollow-core optical fibers running in parallel in the ferrule, and the end plate is connected to the end face of each of the plurality of hollow-core optical fibers so that the end plate is shared by multiple hollow-core optical fibers.

9. The connector of any of claims 1-8, wherein the terminal end of the at least one hollow-core optical fiber is partially or completely angle-cleaved such that the end face of the at least one hollow-core optical fiber is oriented at an angle that is non-perpendicular to a longitudinal length of the at least one hollow-core optical fiber, and the end plate is angled similarly on the ferrule to generally match the angle of the end face.

10. The connector of any of claims 1-9, wherein the end plate is formed from material exhibiting a scratch resistance/hardness of at least 500 HV.

11. The connector of any of claims 1-10, wherein the end plate defines a thickness extending away from the end face of the at least one hollow-core optical fiber of no more than 0.5 mm.

12. The connector of any of claims 1-11, wherein the end plate is optically transparent from being manufactured from a material selected from a group consisting of glass or polymer.

13. A cable assembly for optical data transmission, comprising:
a cable containing at least one hollow-core optical fiber, the cable extending between a first terminal end and a second terminal end;
a first connector including a first connector body coupled to the first terminal end of the cable; and
a second connector including a second connector body coupled to the second terminal end of the cable,
wherein each of the first and second connectors comprises the following elements located within the respective first and second connector body:
an end face of each of the at least one hollow-core optical fiber;
a ferrule including at least one bore, with each of the at least one bore sized to receive one of the at least one hollow-core optical fiber; and
an end plate coupled to the ferrule and connected to the end face of the at least one hollow-core optical fiber, such that the end plate covers the end face to block debris or any other contaminants from ingress into an interior of the at least one hollow-core optical fiber, wherein the end plate is optically transparent to transmit light energy to or from the at least one hollow-core optical fiber, and
wherein the first and second connectors are configured at the first and second connector bodies for mechanical coupling to another cable assembly or an optical receptacle to enable optical data transmission using the at least one hollow-core optical fiber.

14. A method for assembling a connector of any of claims 1-12 for coupling optical fibers in a cable assembly, the method comprising:
inserting the terminal end of the at least one hollow-core optical fiber through the at least one bore defined in the ferrule such that an end face of each of the at least one hollow-core optical fiber projects beyond the front end surface of the ferrule;
connecting the end plate to the end face of the at least one hollow-core optical fiber, the end plate covering the end face to block debris or any other contaminants from ingress into an interior of the at least one hollow-core optical fiber, wherein the end plate is optically transparent; and
coupling the end plate to the front end surface of the ferrule to position the terminal end of the at least one hollow-core optical fiber proximate the front end surface of the ferrule.

15. The method of claim 14, wherein the step of connecting the end plate to the end face of the at least one hollow-core optical fiber further comprises:
laser welding the end plate to the end face of the at least one hollow-core optical fiber, the laser welding producing the weld line at which the end face is connected to the end plate,
wherein the weld line is formed along the outer cladding of the hollow-core optical fiber, such that the weld line defines a continuous, closed periphery surrounding an opening into the interior of the hollow-core optical fiber and thereby sealing the hollow-core optical fiber at the end face from any ingress of debris or other contaminants.
